(19) Europäisches Patentamt
European Patent Office
Office européen des brevets

(11) **EP 4 786 934 A1**

(12) **EUROPEAN PATENT APPLICATION**

(43) Date of publication:
**05.08.2026 Bulletin 2026/32**

(21) Application number: **26151400.4**

(22) Date of filing: **12.01.2026**

(51) International Patent Classification (IPC):
***G01J 3/02*** *(2006.01)*

(52) Cooperative Patent Classification (CPC):
**G01J 3/0232; G01J 3/0208; G01J 3/0297;**
G01J 2003/425

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.01.2025 JP 2025014306**

(71) Applicant: **Yokogawa Electric Corporation
Musashino-shi, Tokyo 180-8750 (JP)**

(72) Inventors:
• **Ishii, Takeaki
  Musashino-shi, Tokyo, 180-8750 (JP)**
• **Hara, Risa
  Musashino-shi, Tokyo, 180-8750 (JP)**
• **Saruya, Toshiyuki
  Musashino-shi, Tokyo, 180-8750 (JP)**
• **Inamura, Kazuhiko
  Musashino-shi, Tokyo, 180-8750 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **LIGHT MEASUREMENT DEVICE**

(57)     A light measurement device includes a control device capable of switching between a measurement mode and a calibration mode, an optical system including a light irradiator that is capable of moving and irradiates an object to be measured with irradiation light, and a light blocking device including a shutter capable of blocking the irradiation light and calibrating the light measurement device. In the measurement mode, the positions of the shutter and the optical system are adjusted so that the shutter does not block the irradiation light and a focusing position of the irradiation light coincides with the position of the object to be measured. In the calibration mode, the positions of the shutter and the optical system are adjusted so that the shutter blocks the irradiation light and the focusing position of the irradiation light coincides with the position of the reference material.

*FIG. 1*

## Description

CROSS-REFERENCE TO RELATED APPLICATION

The present application claims priority to Japanese Patent Application 2025-014306 filed on January 30, 2025, the entire contents of which are incorporated herein by reference.

TECHNICAL FIELD

The present disclosure relates to a light measurement device.

BACKGROUND

A technique exists for calibrating a spectroscopic device using a white plate when no measurement is being performed.

Patent Literature (PTL) 1 discloses a technique in which a movable standard white plate is provided, the optical path is blocked by the standard white plate when calibrating irradiation light, and calibration is performed using the reflected light from the standard white plate.

CITATION LIST

Patent Literature

PTL 1: WO2017/217261

SUMMARY

In the case of the configuration described in PTL 1, during at least one of measurement of the standard white plate and measurement of the object to be measured, the measurement is performed at a position shifted from the focusing position of the irradiation light. When the measurement is performed at a position shifted from the focusing position, the amount of received light is lower than when the measurement is performed at the focusing position, leading to the problem of a lower S/N ratio.

It would be helpful to provide a light measurement device capable of measuring an object at the focusing position of irradiation light both during measurement and during calibration.

[1] A light measurement device comprising a control device, an optical system, and a light blocking device,

wherein the control device capable of switching between a measurement mode and a calibration mode,
wherein the optical system comprises a light irradiator capable of moving and configured to irradiate an object to be measured with irradiation light,
wherein the light blocking device comprises a shutter capable of blocking the irradiation light and calibrating the light measurement device,
wherein a reference material is attached to a surface of the shutter on a light irradiator side of the shutter,
wherein the measurement mode is a mode in which a position of the shutter and a position of the optical system are adjusted so that the shutter does not block the irradiation light and a focusing position of the irradiation light coincides with a position of the object to be measured, and
wherein the calibration mode is a mode in which the position of the shutter and the position of the optical system are adjusted so that the shutter blocks the irradiation light and the focusing position of the irradiation light coincides with a position of the reference material.

This configuration allows the focusing position of the irradiation light to be aligned with the position of the object to be measured during measurement, and with the position of the reference material during calibration.

[2] The light measurement device according to [1], wherein the position of the shutter and the position of the optical system are moved in conjunction with each other.

This configuration makes it possible to prevent malfunctions caused by deviations in either the shutter position or the optical system position.

[3] The light measurement device according to [1] or [2], further comprising a stage, wherein the stage comprises

a base, and
a movable portion capable of moving on the base, and wherein the optical system is installed in the movable portion.

This configuration makes it possible to move the optical system while suppressing the effect on the inside of the optical system.

[4] The light measurement device according to [3],

wherein the stage further comprises a cylindrical cam configured to move in conjunction with the movable portion,
wherein the light blocking device further comprises a cam follower,
wherein the cam follower is connected to the shutter,
wherein the shutter is configured to

rotate in conjunction with behavior of the cam follower, and
block the irradiation light or not block the irradiation light according to a positional relationship between the cylindrical cam and the cam follower,

wherein in the measurement mode, the movable portion is configured to move to a position at which the shutter does not block the irradiation light according to the positional relationship between the cylindrical cam and the cam follower, and

wherein in the calibration mode, the movable portion is configured to move to a position at which the shutter blocks the irradiation light according to the positional relationship between the cylindrical cam and the cam follower.

This configuration makes it possible to link the position of the stage and the operation of the light blocking device mechanically.

[5] The light measurement device according to any one of [1] to [4], further comprising an analysis device,

wherein in the calibration mode, the analysis device is configured to measure the reference material by light reflected by the reference material on the shutter.

This configuration allows the irradiation light to be reflected by the reference material when the irradiation light is blocked.

[6] The light measurement device according to any one of [1] to [5], wherein the optical system and the shutter are configured not to interfere physically with each other.

This configuration makes it possible to prevent measurement errors, malfunctions, and the like caused by physical interference between the optical system and the shutter.

[7] The light measurement device according to any one of [1] to [6], wherein in the measurement mode, the optical system is capable of moving so that a distance between the optical system and the object to be measured is less than a distance between the shutter and the object to be measured.

This configuration makes it easier to align the focusing position of the irradiation light with the object to be measured.

[8] The light measurement device according to any one of [1] to [7], wherein the shutter is arc-shaped.

This configuration allows the space required for storing the shutter to be reduced.

[9] The light measurement device according to [8], further comprising a fixing portion,

wherein the light blocking device further comprises a shaft configured to support the shutter,

wherein in the calibration mode, one end of the shutter is supported by the shaft and another end of the shutter is in contact with the fixing portion, and

wherein during a transition to the measurement mode, the shutter is configured to rotate about the shaft.

This configuration improves the stability of the position of the shutter in the calibration mode.

[10] The light measurement device according to any one of [1] to [9], further comprising

an analysis device comprising a spectroscopic unit and a calculator, and

a fixing portion configured to house the optical system, the light blocking device, and the analysis device.

This configuration shortens the distance from the optical system to the analysis device, so that the attenuation of the signal due to the light guide and the influence of bending of the light guide can be mitigated.

[11] The light measurement device according to [10], wherein the calculator is provided outside the fixing portion.

This configuration allows the calculator to be located away from harsh environments and also makes it possible to suppress the effect of heat generated by the calculator on the optical system and the object to be measured.

According to the present disclosure, a light measurement device capable of measuring an object at the focusing position of irradiation light both during measurement and during calibration can be provided.

BRIEF DESCRIPTION OF THE DRAWINGS

In the accompanying drawings:

FIG. 1 is a diagram illustrating a schematic configuration of a light measurement device according to an embodiment of the present disclosure;

FIG. 2A is a diagram illustrating an example of the arrangement inside a fixing portion in a measurement mode;

FIG. 2B is a diagram illustrating an example of the arrangement inside the fixing portion in a calibration mode;

FIG. 3A is a diagram illustrating an example of the arrangement of a shutter in the measurement mode;

FIG. 3B is a diagram illustrating an example of the arrangement of the shutter in the calibration mode;

FIG. 4A is a diagram illustrating another example of the arrangement of the shutter in the measurement mode;

FIG. 4B is a diagram illustrating another example of the arrangement of the shutter in the calibration mode;

FIG. 5 is a diagram illustrating another example of a schematic configuration of the light measurement device according to an embodiment of the present disclosure;

FIG. 6 is a diagram illustrating another example of a schematic configuration of the light measurement device according to an embodiment of the present disclosure; and

FIG. 7 is a diagram illustrating another example of a schematic configuration of the light measurement device according to an embodiment of the present disclosure.

DETAILED DESCRIPTION

An embodiment of the present disclosure will be described below, with reference to the drawings. In each drawing, parts having the same configuration or function are labeled with the same reference numerals. In the description of the present embodiment, repetitive descriptions of the same parts may be omitted or simplified as appropriate.

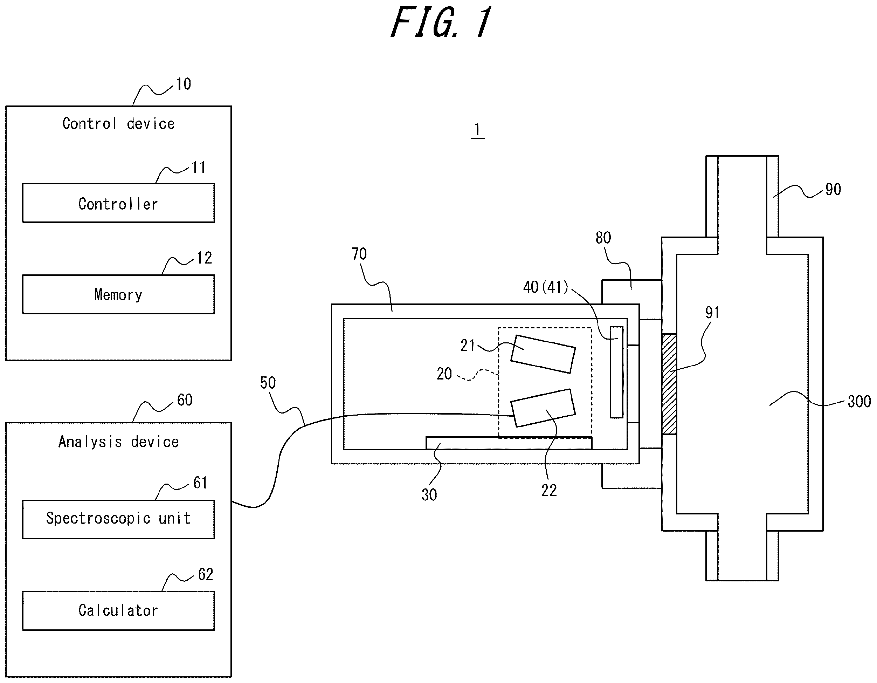

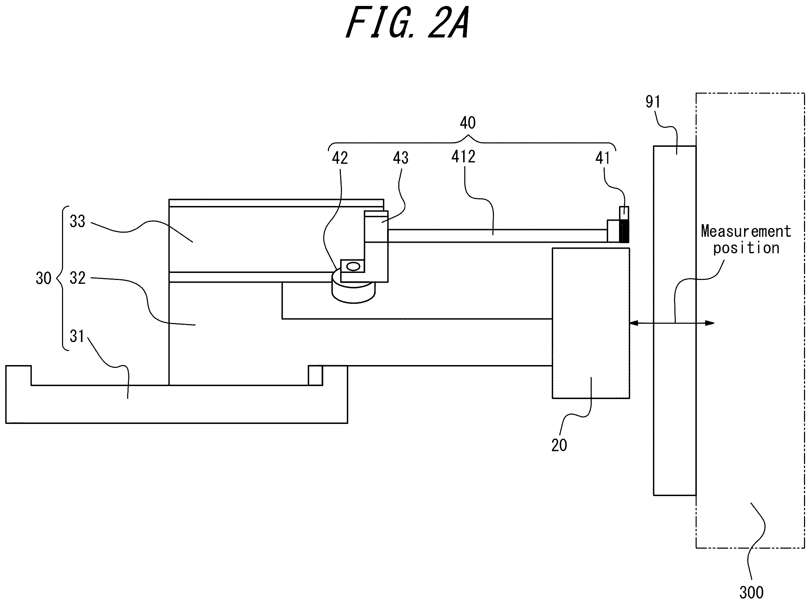

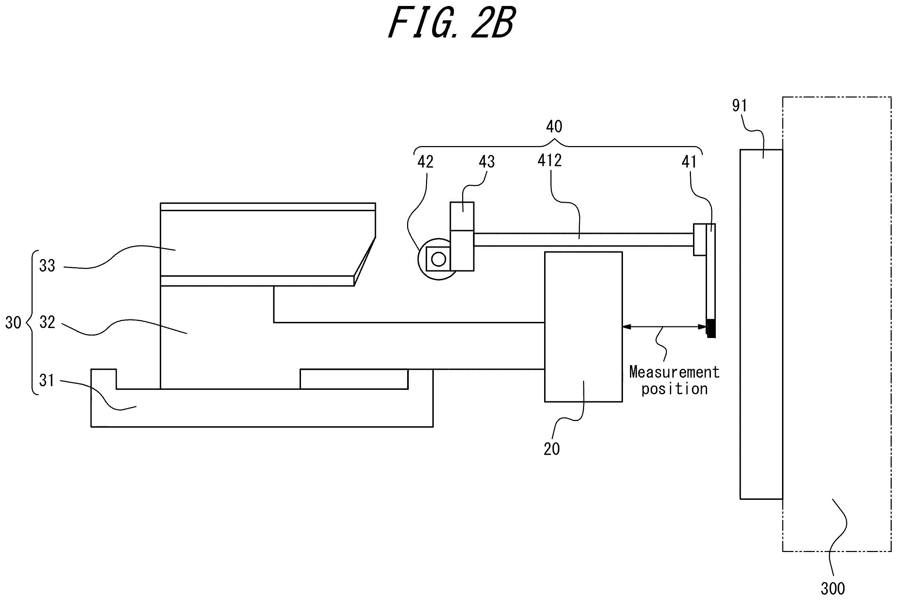

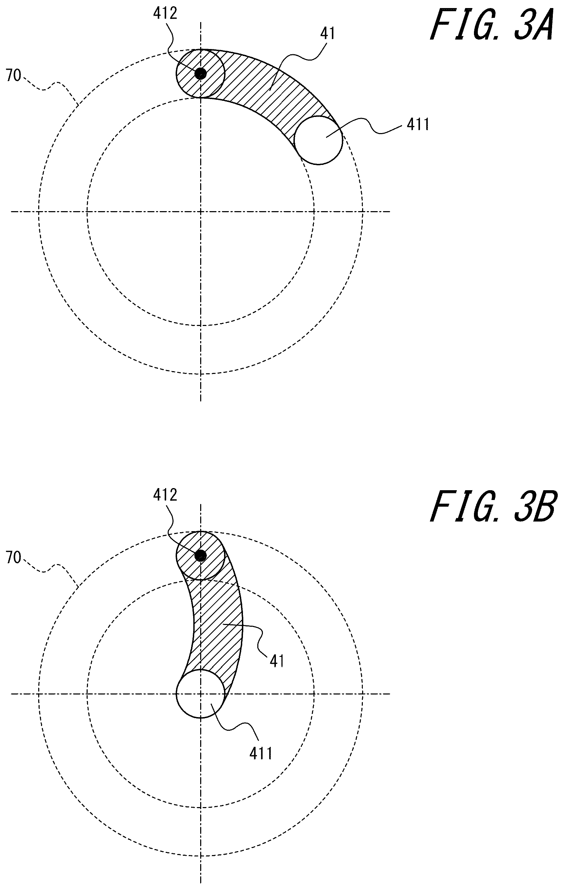

FIG. 1 is a diagram illustrating a schematic configuration of a light measurement device 1 according to an embodiment of the present disclosure. FIG. 2A is a diagram illustrating the positional relationship between an optical system 20, a stage 30, and a light blocking device 40 in a measurement mode. FIG. 2B is a diagram illustrating the positional relationship between the optical system 20, the stage 30, and the light blocking device 40 in a calibration mode. FIG. 3A is a diagram illustrating an example of the arrangement of a shutter 41 in the measurement mode. FIG. 3B is a diagram illustrating an example of the arrangement of the shutter 41 in a calibration mode. The measurement mode and the calibration mode will be described later.

With reference to FIG. 1, the light measurement device 1 according to an embodiment of the present disclosure will be described. The light measurement device 1 includes a control device 10, the optical system 20, the stage 30, the light blocking device 40, a light guide 50, an analysis device 60, and a fixing portion 70. In FIG. 1, only the shutter 41 of the light blocking device 40 is illustrated. The light measurement device 1 is attached by an attachment portion 80 to a container 90 that includes an observation window 91. In an embodiment of the present disclosure, the object to be measured 300 is not particularly limited as long as it is an object that has the property of reflecting or scattering light.

The control device 10 includes a controller 11 and a memory 12.

The controller 11 executes various processes related to the operation of the light measurement device 1 and controls each part of the light measurement device 1. The controller 11 includes one or more processors, one or more dedicated circuits, or a combination thereof. The processor is a general-purpose processor such as a Central Processing Unit (CPU) or a Graphics Processing Unit (GPU), or a dedicated processor that is dedicated to specific processing. Examples of dedicated circuits include a Field-Programmable Gate Array (FPGA) and an Application Specific Integrated Circuit (ASIC). The controller 11 may realize control functions by executing a program stored in the memory 12.

The memory 12 includes one or more semiconductor memories, one or more magnetic memories, one or more optical memories, or a combination of at least two of these. The semiconductor memory is, for example, a random access memory (RAM) or a read only memory (ROM). The RAM is, for example, a static RAM (SRAM) or a dynamic RAM (DRAM). The ROM is, for example, an electrically erasable programmable ROM (EEPROM). The memory 12 functions as, for example, a main storage device, an auxiliary storage device, or a cache memory. The memory 12 may store programs and data used for the operation of the light measurement device 1. The operation of the memory 12 may be controlled by the controller 11.

The optical system 20 includes a light irradiator 21 and a light receiver 22.

The light irradiator 21 irradiates the object to be measured 300 with irradiation light. The light irradiator 21 may be, for example, a tungsten lamp, a halogen lamp, a xenon lamp, a light emitting diode (LED), a laser, or the like. The irradiation light may have a wavelength that matches the optical characteristics of the object to be measured 300. The wavelength that matches the optical characteristics may be, for example, a wavelength that is absorbed or scattered by the object to be measured 300. The irradiation light may have a wavelength in the ultraviolet, visible, near infrared, or infrared range. The irradiation light may be directly irradiated onto the object to be measured 300, or the irradiation light may be guided from a light source outside the light measurement device 1 to the inside of the light measurement device 1 using light guiding means and then irradiated onto the object to be measured 300. The light guiding means is, for example, an optical fiber, an optical coupler, a light pipe, or a mirror. The operation of the light irradiator 21 may be controlled by the controller 11.

The light receiver 22 focuses reflected light generated when the irradiation light is reflected by the object to be measured 300. The light receiver 22 may be, for example, an optical lens or an integrating sphere.

The stage 30 is now described with reference to FIGS. 1, 2A and 2B. The stage 30 includes a base 31, a movable portion 32, and a cylindrical cam 33.

The base 31 is fixed to the fixing portion 70. The base 31 sets the movement range of the movable portion 32.

The movable portion 32 is placed on the base 31 and is capable of moving on the base 31. The optical system 20 is disposed on the movable portion 32. The movable portion 32 may be movable in any direction, such as a direction perpendicular to the observation window 91.

The movable portion 32 is configured to be movable between at least a first position and a second position. The first position is a position at which the focusing position of the irradiation light is the position of the object to be measured 300. The second position is a position at which the focusing position of the irradiation light is the position of a below-described reference material 411 on the shutter 41.

The cylindrical cam 33 is disposed on the movable portion 32 and moves in conjunction with the optical system 20 and the movable portion 32. The cylindrical cam 33 may be integrated with the movable portion 32.

The light blocking device 40 is now described with reference to FIGS. 2A to 3B. The light blocking device 40 includes the shutter 41, a cam follower 42, and a lever 43.

The shutter 41 is described with reference to FIGS. 3A and 3B. Note that the inner circle of the two dotted circles in FIGS. 3A and 3B indicates the range in which the outer periphery of the optical system 20 fits. The outer circle indicates the inner wall of the fixing portion 70. As illustrated in FIG. 1, the shutter 41 can be installed between the light irradiator 21 and the object to be measured 300. The shutter 41 includes a configuration for blocking or reducing the amount of light irradiated from the light irradiator 21 onto the object to be measured 300. The shutter 41 is, for example, an arc-shaped shutter. The shutter 41 may be supported by a shaft 412. The shutter 41 may be rotatable about the shaft 412. The shaft 412 has one end connected to the shutter 41 and the other end connected to the lever 43, described below, with a non-illustrated shaft bearing portion between the two. The shaft bearing portion may be fixed to the base 31. The shutter 41 includes a reference material 411 on the surface of the shutter 41 on the light irradiator 21 side.

The reference material 411 is a material that reflects irradiation light and allows for calibration of the instrument. The reference material 411 is attached or coated on the surface of the shutter 41 on the light irradiator 21 side. The material constituting the reference material 411 may be, for example, barium sulfate, fluororesin, PTFE, or a metal such as gold or aluminum.

The cam follower 42 and the lever 43 are described with reference to FIGS. 2A and 2B. The cam follower 42 is connected to the shutter 41 via the shaft 412 and the lever 43. The cam follower 42 rotates the shutter 41, the shaft 412, and the lever 43 along the outer periphery of the cylindrical cam 33 of the stage 30. The cam follower 42 may be, for example, a bearing.

The lever 43 is connected between the shaft 412 and the cam follower 42. In addition, the lever 43 is connected to the shutter 41 via the shaft 412. The lever 43 adjusts the shutter 41 to move to a predetermined position in accordance with the positional relationship between the cylindrical cam 33 and the cam follower 42. The lever 43 may be adjusted by, for example, combining a torsion spring that rotates the lever 43 in the axial direction of the shaft 412 with a screw for adjusting the movable range of the lever 43.

The positional relationship between the cylindrical cam 33 and the cam follower 42 is configured so that, at a first position, the shutter 41 is in a position where it does not block the irradiation light, and at a second position, the shutter 41 is in a position where it blocks the irradiation light. The lever 43 is adjusted in the second position so that the portion of the shutter 41 provided with the reference material 411 is positioned to receive the irradiation light.

In the second position, as illustrated in FIG. 2B, the cylindrical cam 33 and the cam follower 42 need not be in contact with each other.

Returning to FIG. 1, the remaining configuration of the light measurement device 1 will be described.

The light guide 50 guides the reflected light focused by the light receiver 22 to the analysis device 60. The light guide 50 is, for example, an optical fiber, an optical coupler, a light pipe, or a mirror.

The analysis device 60 analyzes the reflected light focused by the light receiver 22 and received via the light guide 50. The analysis device 60 may, for example, detect the intensity of the reflected light at each wavelength. The analysis device 60 may include, for example, a spectroscopic unit 61 and a calculator 62. The operation of the analysis device 60 may be controlled by the controller 11.

The spectroscopic unit 61 may include a component having a spectroscopic function, such as a diffraction grating, an interferometer, or a filter.

The calculator 62 may include one or more processors, one or more dedicated circuits, or a combination thereof. The processor is a general-purpose processor such as a Central Processing Unit (CPU) or a Graphics Processing Unit (GPU), or a dedicated processor that is dedicated to specific processing. Examples of dedicated circuits include a Field-Programmable Gate Array (FPGA) and an Application Specific Integrated Circuit (ASIC). The calculator 62 may use means such as multivariate analysis to calculate the component concentration or the like of the object to be measured 300 from the obtained reflected light intensity. The controller 11 may have the function of the calculator 62.

The fixing portion 70 fixes the stage 30. The fixing portion 70 is, for example, a lens barrel or a probe. The cross-sectional inner diameter of the fixing portion 70 may be configured to be larger than the cross-sectional outer diameter of the optical system 20.

The attachment portion 80 is a jig for fixing the fixing portion 70 to the container 90 when measuring the object to be measured 300. The attachment method is not particularly limited, but may be, for example, by clamps or screws.

The observation window 91 transmits the irradiation light from the light irradiator 21 and the reflected light from the object to be measured 300. The observation window 91 may be made of a material such as acrylic resin, glass, quartz, sapphire, or diamond. The observation window 91 may be coated to prevent reflection of the wavelengths used for analysis.

Next, the processes executed by each part of the light measurement device 1 will be described. In one embodiment of the present disclosure, the light measurement device 1 measures and analyzes the spectrum of reflected light from the object to be measured 300 using a diffuse reflectance method.

(Measurement of reference material)

The measurement process of the reference material will be described below. When performing calibration, the controller 11 of the control device 10 moves the optical system 20 so that the focusing position of the irradiation light coincides with the position of the reference material 411, as illustrated in FIG. 2B. Measurement of the reference material is performed when the shutter 41 is in the blocking state, using the reference material 411 attached to the shutter 41. As a specific measurement method, first, the light irradiator 21 irradiates the object to be measured 300 with irradiation light. The irradiation light is reflected by the reference material 411 attached to the shutter 41, which is in the blocking state. The reference reflected light that is reflected by the reference material 411 is focused by the light receiver 22 and guided to the analysis device 60 via the light guide 50.

The analysis device 60 calculates the spectrum $I_0(\lambda)$ of the reference material 411 from the reference reflected light that is received. The analysis device 60 stores the calculated spectrum $I_0(\lambda)$ in the memory 12.

(Measurement of the object to be measured)

Next, the process of measuring the object to be measured 300 by the light measurement device 1 will be described. When performing measurement, the controller 11 of the control device 10 moves the optical system 20 so that the focusing position of the irradiation light coincides with the position of the object to be measured 300, as illustrated in FIG. 2A. The light irradiator 21 irradiates the object to be measured 300 with irradiation light through the observation window 91. The light receiver 22 focuses the light reflected by the object to be measured 300 and guides the light to the analysis device 60 via the light guide 50.

The analysis device 60 calculates the spectrum $I(\lambda)$ of the object to be measured 300 from the received reflected light. Subsequently, the analysis device 60 retrieves the spectrum $I_0(\lambda)$ of the reference material 411 stored in the memory 12 and calculates a spectrum based on the reference data from the spectra $I_0(\lambda)$ and $I(\lambda)$. The spectrum based on the reference data may use, for example, the reflectance $R(\lambda)$ calculated by the following equation (1), the absorbance $A(\lambda)$ calculated by the following equation (2), and the Kubelka-Munk function of the following equation (3). In the following equation (3), K is the absorption coefficient, and S is the scattering coefficient.

$$R(\lambda) = \frac{I(\lambda)}{I_0(\lambda)} \qquad (1)$$

$$A(\lambda) = -\log_{10}(R) \qquad (2)$$

$$\frac{K}{S} = \frac{(1-R)^2}{2R} \qquad (3)$$

The analysis device 60 inputs the spectrum based on the reference data into a calibration model stored in the memory 12 and calculates the component concentration of the object to be measured 300. The calibration model is a model for predicting a target from a spectrum and is created using spectrum data based on reference data. The calibration model may be created by multiple regression, principal component regression (PCR), partial least squares regression (PLS regression), an artificial neural network (ANN), or a combination of these methods, but the method of creating the calibration model is not limited to these. The analysis device 60 may create a calibration model using a spectrum based on the reference data.

(Control of the light measurement device by the control device)

Next, the control of the light measurement device 1 by the control device 10 will be described. The light measurement device 1 according to an embodiment of the present disclosure includes a measurement mode in which the object to be measured 300 is measured by irradiation light and a calibration mode in which the reference material 411 is measured by reflecting the irradiation light off the reference material 411. The controller 11 of the control device 10 is capable of switching between the measurement mode and the calibration mode.

(Operation of stage and light blocking device)

Next, the operation of the stage 30 and the light blocking device 40 in the measurement mode will be described with reference to FIGS. 2A and 3A. As illustrated in FIG. 2A, when the controller 11 of the control device 10 switches the light measurement device 1 to the measurement mode, the stage 30 moves the movable portion 32 to the first position. When the movable portion 32 moves to the first position, the cam follower 42 rotates along the cylindrical cam 33. As the cam follower 42 rotates, the lever 43 and the shaft 412 rotate. This causes the shutter 41 connected to the shaft 412 to rotate as well. At this time, as illustrated in FIG. 3A, in the measurement mode, the shutter 41 may be configured not to interfere physically with the optical system 20. In addition, in the example illustrated in FIG. 2A, the distance from the object to be measured 300 to the optical system 20 is approximately the same as the distance from the object to be measured 300 to the shutter 41, but the distance from the object to be measured 300 to the optical system 20 may be shorter than the distance from the object to be measured 300 to the shutter 41.

Next, the operation of the stage 30 and the light blocking device 40 in the calibration mode will be described with reference to FIGS. 2B and 3B. As illustrated in FIG. 2B, when the controller 11 of the control device 10 switches the light measurement device 1 to the calibration mode, the stage 30 moves the movable portion 32 to the second position. When the movable portion 32 moves to the second position, the cam follower 42 rotates in the opposite direction from the direction during the transition to the measurement mode. As the cam follower 42 rotates, the lever 43 and the shaft 412 rotate. This causes the shutter 41 connected to the shaft 412 to rotate as well. At this time, in the calibration mode, the lever 43 is adjusted so that the portion of the shutter 41 provided with the reference material 411 is positioned to receive the irradiation light, as illustrated in FIG. 3B. At this time, the optical system 20 may be designed to be located in a position that does not physically interfere with the shutter 41, as illustrated in FIG. 2B.

When the movable portion 32 of the stage 30 moves from the second position to the first position, the rotation speed of the shutter 41 may be designed so that the shutter 41 and the optical system 20 do not physically interfere with each other.

With this configuration, the light measurement device 1 can measure the object to be measured 300 at the focusing position of the irradiation light in the measurement mode. The light measurement device 1 can measure the reference material 411 at the focusing position of the irradiation light in the calibration mode. Since the object to be measured 300 and the reference material 411 can be measured at the respective focusing positions of the irradiation light, no decrease in the amount of received light occurs in either the measurement mode or the calibration mode. This configuration allows the light measurement device 1 to measure both the object to be measured 300 and the reference material 411 without a decrease in the S/N ratio. By moving the movable portion 32, both the position of the optical system 20 and the position of the shutter 41 can also be adjusted. Therefore, one power source is sufficient.

In a case in which the cross-sectional shape of the optical system 20 is circular, the optical system 20 can be moved very close to the observation window 91 as a result of the optical system 20 being movable and the shutter 41 being arc-shaped. Therefore, even if the observation window 91 is thick, the object to be measured 300 can be measured at the focusing position of the irradiation light. This makes it possible to measure the object to be measured 300 contained in a container 90 with high internal pressure using the light measurement device 1 according to an embodiment of the present disclosure. Furthermore, by forming the shutter 41 in an arc shape, the space required to accommodate the shutter 41 is reduced, and the fixing portion 70 can be made smaller. In addition, since the operations of the optical system 20 and the shutter 41 do not in principle interfere with each other, the optical system 20 and the shutter 41 are unlikely to malfunction. It goes without saying that if the cross-sectional shape of the optical system 20 is not circular, the shape of the shutter 41 may be changed to match the cross-sectional shape of the optical system 20.

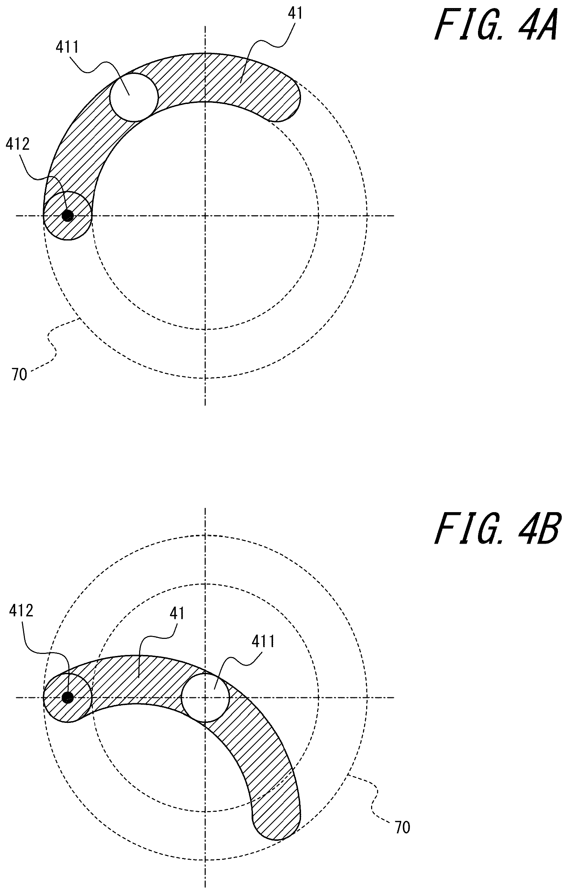

Next, a first variation of the present embodiment will be described with reference to FIGS. 4A and 4B. Note that the inner circle of the two dotted circles in FIGS. 3A and 3B indicates the range in which the outer periphery of the optical system 20 fits. The outer circle indicates the inner wall of the fixing portion 70. In the first variation, one end of the shutter 41 is supported by the shaft 412 and the other end is configured to contact the fixing portion 70. FIG. 4A is a diagram illustrating the arrangement of the shutter 41 in the measurement mode. FIG. 4B is a diagram illustrating the arrangement of the shutter 41 in the calibration mode.

As illustrated in FIG. 4A, in the measurement mode, the shutter 41 may be configured so as not to interfere physically with the optical system 20. As illustrated in FIG. 4B, the position of the shutter 41 in the calibration mode may be adjusted by bringing one end thereof that is not supported by the shaft 412 into contact with the fixing portion 70. At this time, the shutter 41 is adjusted so that the portion provided with the reference material 411 is positioned to receive the irradiation light. With this configuration, the position of the shutter 41 in the calibration mode can be adjusted without relying on the lever 43.

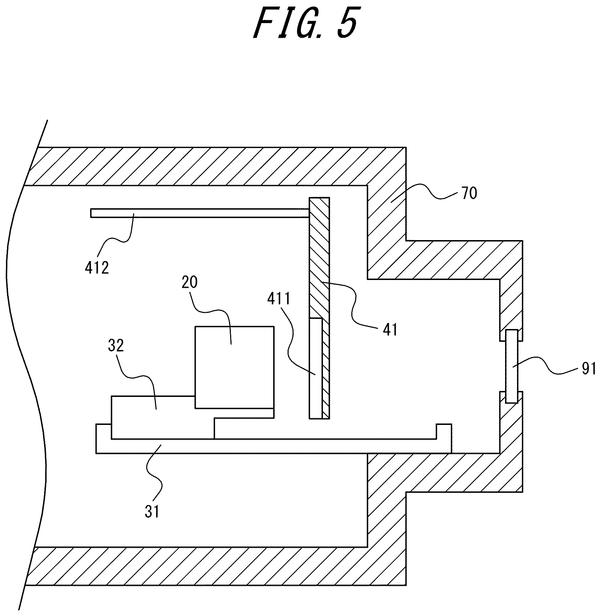

Next, a second variation of the present embodiment will be described with reference to FIG. 5. FIG. 5 is a diagram illustrating the light measurement device 1 including a fixing portion 70 that has a narrower diameter near the observation window 91 and a wider diameter away from the observation window 91. The base 31 of the stage 30 is disposed so as to reach the point where the diameter of the fixing portion 70 becomes narrower. Therefore, the movable portion 32 can move the optical system 20 to the immediate vicinity of the observation window 91. With this configuration, the size of the shutter 41 is not restricted by the diameter of the fixing portion 70 near the observation window 91. A large-sized shutter can therefore be used. By use of a large-sized shutter, the light blocking efficiency for the object to be measured 300 can be improved, and the thermal influence on the object to be measured 300 can be reduced.

The present disclosure is not limited to the embodiments described above. For example, a plurality of configurations may be combined, or one configuration may be divided. Instead of executing a plurality of procedures in chronological order in accordance with the description, the plurality of procedures may be executed in parallel or in a different order according to the processing capability of the apparatus that executes each step, or as required. Other modifications can be made without departing from the spirit of the present disclosure.

For example, in the above embodiment, the control device 10 and the analysis device 60 are configured separately, but the processing by the calculator 62 of the analysis device 60 may be performed by the control device 10.

For example, in the above embodiment, an example is described in which the container 90 is configured to include the observation window 91, but the observation window 91 may be provided in the fixing portion 70.

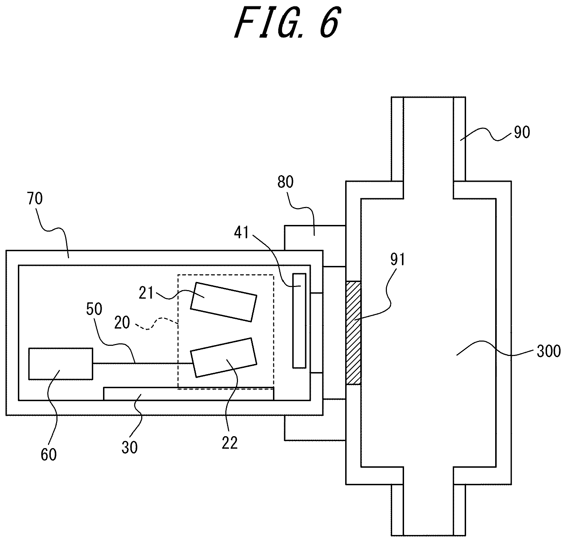

For example, in the above embodiment, an example is described in which the analysis device 60 is installed outside the fixing portion 70, but the entire analysis device 60 may be installed inside the fixing portion 70 as illustrated in FIG. 6. With this configuration, the distance from the light receiver 22 to the analysis device 60 is shortened, so that the attenuation of the signal due to the light guide 50 and the influence of bending of the light guide 50 can be mitigated.

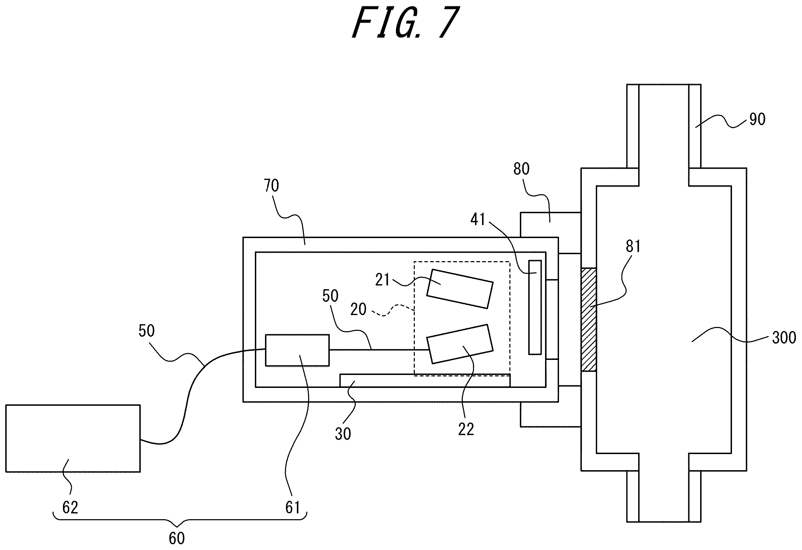

As illustrated in FIG. 7, a configuration may be adopted in which only the spectroscopic unit 61 of the analysis device 60 is disposed inside the fixing portion 70. With this configuration, the distance from the light receiver 22 to the spectroscopic unit 61 can be shortened, while the calculator 62 can be placed farther away from the object to be measured 300 and the optical system 20. Therefore, the attenuation of the signal due to the light guide 50 and the influence of bending of the light guide 50 can be mitigated. The calculator 62 can also be placed farther away from harsh environments. Furthermore, the effect that heat generated by the calculator 62 has on the optical system 20 and the object to be measured 300 can be suppressed.

**Claims**

1. A light measurement device comprising a control device, an optical system, and a light blocking device,

   wherein the control device is capable of switching between a measurement mode and a calibration mode,
   wherein the optical system comprises a light irradiator capable of moving and configured to irradiate an object to be measured with irradiation light,
   wherein the light blocking device comprises a shutter capable of blocking the irradiation light and calibrating the light measurement device,
   wherein a reference material is attached to a surface of the shutter on a light irradiator side of the shutter,
   wherein the measurement mode is a mode in which a position of the shutter and a position of the optical system are adjusted so that the shutter does not block the irradiation light and a focusing position of the irradiation light coincides with a position of the object to be measured, and
   wherein the calibration mode is a mode in which the position of the shutter and the position of the optical system are adjusted so that the shutter blocks the irradiation light and the focusing position of the irradiation light coincides with a position of the reference material.

2. The light measurement device according to claim 1, wherein the position of the shutter and the position of the optical system are moved in conjunction with each other.

3. The light measurement device according to claim 1, further comprising a stage,

   wherein the stage comprises

      a base, and
      a movable portion capable of moving on the base, and

   wherein the optical system is installed in the movable portion.

4. The light measurement device according to claim 3,

   wherein the stage further comprises a cylindrical cam configured to move in conjunction with the movable portion,
   wherein the light blocking device further comprises a cam follower,
   wherein the cam follower is connected to the shutter,
   wherein the shutter is configured to

      rotate in conjunction with behavior of the cam follower, and
      block the irradiation light or not block the irradiation light according to a positional relationship between the cylindrical cam and the cam follower,

   wherein in the measurement mode, the movable portion is configured to move to a position at which the shutter does not block the irradiation light according to the positional relationship between the cylindrical cam and the cam follower, and
   wherein in the calibration mode, the movable portion is configured to move to a position at which the shutter blocks the irradiation light according to the positional relationship between the cylindrical cam and the cam follower.

5. The light measurement device according to claim 1, further comprising an analysis device,
   wherein in the calibration mode, the analysis device is configured to measure the reference material by light reflected by the reference material on the shutter.

6. The light measurement device according to claim 1, wherein the optical system and the shutter are configured not to interfere physically with each other.

7. The light measurement device according to claim 1, wherein in the measurement mode, the optical system is capable of moving so that a distance between the optical system and the object to be measured is less than a distance between the shutter and the object to be measured.

8. The light measurement device according to claim 1, wherein the shutter is arc-shaped.

9. The light measurement device according to claim 8, further comprising a fixing portion,

   wherein the light blocking device further comprises a shaft configured to support the shutter,
   wherein in the calibration mode, one end of the shutter is supported by the shaft and another end of the shutter is in contact with the fixing portion, and
   wherein during a transition to the measurement mode, the shutter is configured to rotate about the shaft.

10. The light measurement device according to claim 1, further comprising

    an analysis device comprising a spectroscopic unit and a calculator, and
    a fixing portion configured to house the optical system, the light blocking device, and the analysis device.

11. The light measurement device according to claim 10, wherein the calculator is provided outside the fixing portion.

# FIG. 1

FIG. 2A

*FIG. 2B*

Measurement position

300

91

41

40

412

43

42

20

33

32

31

30

FIG. 3A

FIG. 3B

*FIG. 4A*

*FIG. 4B*

# FIG. 5

# FIG. 6

EP 4 786 934 A1

# FIG. 7

**Europäisches Patentamt**
**European Patent Office**
**Office européen des brevets**

# EUROPEAN SEARCH REPORT

Application Number

EP 26 15 1400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/055116 A1 (MACZURA ANTHONY K [US] ET AL) 27 December 2001 (2001-12-27) | 1,2,5-11 | INV. G01J3/02 |
| A | * paragraphs [0008] - [0012]; claim 1; figures 1,3A,3B,5A,5B, 6 * <br> * paragraphs [0031] - [0050] * <br> * paragraphs [0060] - [0067] * <br> * paragraphs [0089] - [0097] * <br> ----- | 3,4 | |
| A | WO 2012/109177 A1 (DIRAMED LLC [US]) 16 August 2012 (2012-08-16) <br> * paragraphs [0020] - [0043] * <br> ----- | 1-11 | |
| A | US 2006/114465 A1 (HART ROBERT H [US] ET AL) 1 June 2006 (2006-06-01) <br> * paragraphs [0030] - [0036]; figures 4,5 * <br> ----- | 1-11 | |

| | |
|---|---|
| | **TECHNICAL FIELDS SEARCHED (IPC)** |
| | G01J |

The present search report has been drawn up for all claims

| Place of search | Date of completion of the search | Examiner |
|---|---|---|
| Munich | 26 June 2026 | Hambach, Dirk |

EPO FORM 1503 03.82 (P4C01)

## ANNEX TO THE EUROPEAN SEARCH REPORT
## ON EUROPEAN PATENT APPLICATION NO.

EP 26 15 1400

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2026

| Patent document cited in search report | Publication date | Patent family member(s) | | Publication date |
|---|---|---|---|---|
| US 2001055116 A1 | 27-12-2001 | NONE | | |
| WO 2012109177 A1 | 16-08-2012 | EP | 2673605 A1 | 18-12-2013 |
| | | US | 2012206714 A1 | 16-08-2012 |
| | | US | 2017131145 A1 | 11-05-2017 |
| | | WO | 2012109177 A1 | 16-08-2012 |
| US 2006114465 A1 | 01-06-2006 | DE | 602005005919 T2 | 10-06-2009 |
| | | EP | 1655589 A2 | 10-05-2006 |
| | | US | 2006114465 A1 | 01-06-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2025014306 A

- WO 2017217261 A